(19) Europäisches Patentamt
European Patent Office
Office européen des brevets

(11) **EP 4 312 158 A1**

(12) **EUROPEAN PATENT APPLICATION**

(43) Date of publication:
**31.01.2024   Bulletin 2024/05**

(21) Application number: **22187939.8**

(22) Date of filing: **29.07.2022**

(51) International Patent Classification (IPC):
*G06N 3/08* *(2023.01)*        *G06F 21/55* *(2013.01)*
*G06F 21/56* *(2013.01)*        *G06F 21/57* *(2013.01)*
*H04L 9/40* *(2022.01)*         *G06F 21/14* *(2013.01)*
*G06N 7/00* *(2023.01)*         *G06N 3/04* *(2023.01)*
*G06F 21/10* *(2013.01)*

(52) Cooperative Patent Classification (CPC):
**H04L 63/1416; G06F 21/14; G06F 21/554;**
**G06F 21/566; G06F 21/577; G06N 3/08;**
**H04L 63/1441;** G06F 21/10; G06N 3/045;
G06N 7/01

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Irdeto B.V.**
**2132 LS  Hoofddorp (NL)**

(72) Inventor: **Roelse, Peter**
**Eindhoven (NL)**

(74) Representative: **Boult Wade Tennant LLP**
**Salisbury Square House**
**8 Salisbury Square**
**London EC4Y 8AP (GB)**

(54) **PROTECTION OF NEURAL NETWORKS AGAINST CLONING ATTACKS**

(57)    A method of protecting an implementation of a neural network against a cloning attack, the neural network configured to generate a result based on an input sample from a predetermined domain of possible samples, the neural network trained to provide functionality corresponding to a subset of the domain, wherein the method comprises: receiving, from a user, a plurality of queries having a corresponding query sample from the domain and, for each query, performing a first test to determine whether or not the corresponding query sample is a member of the subset; performing a second test to identify whether the user is performing a cloning attack against the neural network, wherein the second test identifies that the user is performing a cloning attack against the neural network if a number of queries from the plurality of queries for which the corresponding query sample is determined to not be a member of the subset exceeds a first threshold value; and in response to the second test identifying that the user is performing a cloning attack against the neural network, performing one or more countermeasures for the cloning attack.

FIGURE 4

**Description**

**Field of the invention**

The present invention relates to protecting an implementation of a neural network against a cloning attack.

**Background of the invention**

Neural networks that perform classification tasks are well-known. If $\mathcal{X}$ denotes the set of all possible inputs to such a network and if k denotes the number of classes, then the network can be described by, or can be considered as implementing, a parameterized function $f_\theta : \mathcal{X} \to [0,1]^k$. The function $f_\theta$ represents the parameters of the network, e.g. the configuration/architecture/structure of the network (e.g. number and type of layers, nodes, connectivity therebetween, activation functions, etc.), coefficients, weights, biases, etc. Some of these parameters may be learnable/learned via a process known as training. The parameter $\theta$ is referred to as the model and represents the learnable parameters. An element $x$ of $\mathcal{X}$ is referred to as a sample. The output $f_\theta(x)$ of the classification network $f_\theta$ is a $k$-dimensional vector. The i-th component of the output $f_\theta(x)$ (with $1 \leq i \leq k$ and $x \in \mathcal{X}$) is denoted by $f_\theta(x)_i$ and is referred to as the activation strength of class $i$. The index $i$ is referred to as the label of the class. It may be assumed without loss of generality that the final layer of the network $f_\theta$ uses the well-known *softmax* function so that $f_\theta(x)_i$ can be interpreted as the probability that $x$ belongs to class i for $1 \leq i < k$, i.e. $0 \leq f_\theta(x)_i \leq 1$ for $1 \leq i \leq$ k and $\sum_{i=1}^{k} f_\theta(x)_i = 1$.

It will be appreciated that the set $\mathcal{X}$ of all possible inputs to the network $f_\theta$ depends on the classification task for which the network $f_\theta$ has been generated/designed. For example: if the network $f_\theta$ is intended to classify images based on their content (i.e. based on what those images depict), then the set $\mathcal{X}$ may be the set of all possible images; if the network $f_\theta$ is intended to classify text-based files based on their content (i.e. based on the information conveyed or represented by those files), then the set $\mathcal{X}$ may be the set of all possible text-based files; if the network $f_\theta$ is intended to classify songs to identify their genre, then the set $\mathcal{X}$ may be the set of all possible audio files. Likewise, the number k of classes, and what those classes represent, depends on the classification task for which the network $f_\theta$ has been generated/designed. For example: if the network $f_\theta$ is intended to classify images into images that depict a dog, a cat, a bird, or a fish, then one could set $k = 4$ with the 4 classes being "dog", "cat", "bird", "fish", or one could set $k = 5$ with the 5 classes being "dog", "cat", "bird", fish", "no dog, cat, bird, or fish". It will be appreciated that many other examples and uses of classification using the network $f_\theta$ are possible.

There are also many different architectures for the network $f_\theta$, as well as many different methods of implementing the network $f_\theta$ in hardware and/or software, as will be readily appreciated by the skilled person.

One may assume that the index associated with the maximum value in $f_\theta(x)$ is unique and that the well-known *argmax* function, when applied to $f_\theta(x)$, therefore can be assumed to return an element of $\{1,2,...,k\}$ instead of a subset of $\{1,2,...,k\}$. Under these assumptions, $argmax_i f_\theta(x)_i$ is the label associated with the most likely class.

Let $\phi : \mathcal{X} \to \{1, 2, ..., k\}$ denote the function mapping an input $x \in \mathcal{X}$ to its true/correct label $\phi(x)$. A train set $\mathcal{D}_{train} := \{(x_i, \phi(x_i)) \mid x_i \in \mathcal{X} \wedge 1 \leq i \leq n_{train}\}$ with $n_{train}$ elements is used to determine the value of the model $\theta$, in a process of supervised learning. The network $f_\theta$ is typically trained using only samples from the problem that is to be addressed by the network $f_\theta$. For example, if $f_\theta$ is an image classifier with two classes and if these classes are "airplane" and "ship", then any $x_i$ of $(x_i, \phi(x_i)) \in \mathcal{D}_{train}$ will be an image of either an airplane or a ship. Such a set of Problem Domain (PD) samples is denoted herein by $\mathcal{X}_0 \subset \mathcal{X}$. Elements of the set $\mathcal{X}_1 := \mathcal{X} \setminus \mathcal{X}_0$ are referred to herein as Non-Problem Domain (NPD) samples.

Sometimes, one of the classes of the network $f_\theta$ represents NPD samples. This means that such networks $f_\theta$ use both PD samples and NPD samples for training. For example, if the network $f_\theta$ is an image classifier intended to determine whether an image depicts a dog or a cat, then there may be three classes, namely "dog", "cat", "no dog or cat", in which case $\mathcal{X}_0$ may be the set of images depicting dogs or cats, and $\mathcal{X}_1$ may be set of images that depict neither a dog nor a cat.

Sometimes, the network $f_\theta$ may assign multiple labels to an input $x \in \mathcal{X}$. For example, if the network $f_\theta$ is an image classifier intended to determine whether an image depicts a dog and/or a cat, then there may be four classes, namely "dog", "cat", "dog and cat", "no dog or cat", in which case $\mathcal{X}_0$ may be the set of images depicting dogs and/or cats, and $\mathcal{X}_1$ may be set of images that depict neither a dog nor a cat. The associated classification problem is known as multi-label classification.

A test set $\mathcal{D}_{test} := \{(x_i, \phi(x_i)) \mid x_i \in \mathcal{X} \wedge 1 \leq i \leq n_{test}\}$ with $n_{test}$ elements may be used to determine the accuracy of the trained network $f_\theta$. Different methods exist for measuring accuracy. If [P] denotes the Iverson bracket of a statement P, returning one if P is true and returning zero if P is false, then the widely-used "top-1 accuracy" is defined as

$$Acc(f_\theta) := \frac{1}{n_{test}} \sum_{(x,y) \in \mathcal{D}_{test}} [argmax_i f_\theta(x)_i = y]$$

, i.e. the proportion of samples $x$ from the test set $\mathcal{D}_{test}$ for which the predicted label $argmax_i f_\theta(x)_i$ matches the true label $\phi(x)$.

In general, the accuracy depends on the quality of the train set $\mathcal{D}_{train}$, in particular on how well the samples of its elements represent the problem domain associated with the k classes (and on how well the samples of its elements represent the non-problem domain if one of these classes represents NPD samples).

Obtaining a high-quality train set $\mathcal{D}_{train}$ can be difficult and time consuming. First, one needs to obtain PD samples $x_i \in \mathcal{X}_0$ that represent the problem domain well. Typically, this can only be achieved if a large number of samples is used. Second, each of these samples $x_i \in \mathcal{X}_0$ needs to be labelled with its true label $\phi(x_i)$ which may require substantial manual effort.

In one deployment scenario, a network $f_\theta$ may be implemented in the cloud, e.g. with a paid API being provided to enable access to, and use of, the network $f_\theta$. Such access may be offered as a pay-per-query service and enables customers to use the network $f_\theta$ without the need to train a network themselves. In another deployment scenario, a software/firmware application may implement a network $f_\theta$ in a consumer device, e.g. in a mobile device. Implementations of the network $f_\theta$ may be protected, e.g. by using read-proof hardware. The user may have API access to such a protected network $f_\theta$. Other deployment scenarios are, of course, possible. Whatever the context, in the following, a party that provides API access to the network $f_\theta$ is referred to as a service provider, and consumers (i.e. those who use the network $f_\theta$, e.g. via the API) are referred to as users of the network $f_\theta$. If a user submits a query having a query sample $x \in \mathcal{X}$ to the network $f_\theta$, then the network $f_\theta$ typically returns either the vector $f_\theta(x)$ or the label $argmax_i f_\theta(x)_i$ (that is, an identification of, or the label associated with, the most likely class).

It has been shown that an adversary can clone the functionality of a trained network $f_\theta$ (this trained network $f_\theta$ then being referred to as the target network). Such cloning of the target network $f_\theta$ may be achieved by only using API access to the target network $f_\theta$ - this is discussed, for example, in: (a) Florian Tramèr et al: "Stealing Machine Learning Models via Prediction APIs", Proceedings of the 25th USENIX Security Symposium August 2016, Austin, TX, pp. 601 - 618, hereinafter reference [1]; (b) Tribhuvanesh Orekondy et al: "Knockoff Nets: Stealing Functionality of Black-Box Models", Proceedings of the IEEE/CVF Conference on Computer Vision and Pattern Recognition (CVPR), Long Beach, CA, USA, 2019, pp. 4949 - 4958, hereinafter reference [2]; (c) Jacson Rodrigues Correia-Silva et al: "Copycat CNN: Stealing Knowledge by Persuading Confession with Random Non-Labeled Data", 2018 International Joint Conference on Neural Networks (IJCNN), 2018, Rio de Janeiro, Brazil, July 2018, pp. 1 - 8, hereinafter reference [3]; and (d) Arne Aarts et al: "Leveraging Partial Model Extractions using Uncertainty Quantification", 2021 IEEE 10th International Conference on Cloud Networking (CloudNet), Virtual Conference, November 2021, pp. 19 - 25, hereinafter reference [4].

To create a clone network, the adversary chooses a neural network $g_\phi : \mathcal{X} \to [0,1]^k$, where the function $g_\phi$ represents the parameters of the clone network and where the model $\phi$ represents its learnable parameters. In practice, the adversary may not know the architecture of the target network $f_\theta$, or they may have access to a better network (e.g. in terms of performance and/or implementation size while being capable of achieving a comparable top-1 accuracy). As a result, the network $g_\phi$ and its model $\phi$ are not necessarily the same as the target network $f_\theta$ and its model $\theta$. For example, $g_\phi$ may have a different number of layers and/or different types of layer and/or a different number of learnable parameters.

Next, the adversary chooses m distinct samples $y_i \in \mathcal{X}$ for $1 \leq i \leq$ m, for some positive integer m. After this, the adversary uses the API access to $f_\theta$ to create the set $\mathcal{D} := \{(y_i, f_\theta(y_i)) \mid 1 \leq i \leq m\}$. In other words, the adversary uses the API access to label each of the adversary's samples $y_i \in \mathcal{X}$ for $1 \leq i \leq$ m.

Finally, the set $\mathcal{D}$ is used to train the clone network $g_\phi$, i.e. to determine the value of the model $\phi$.

Theoretically, the quality of the clone network $g_\phi$ could be expressed as its top-1 accuracy on the test set $\mathcal{D}_{test}$, i.e.

$$Acc(g_\phi) = \frac{1}{n_{test}} \sum_{(x,y) \in \mathcal{D}_{test}} \left[ argmax_i g_\phi(x)_i = y \right]$$

. Likewise, theoretically, the quality of the clone network $g_\phi$ could be expressed as its top-1 agreement with the target network $f_\theta$ on the test set $\mathcal{D}_{test}$, i.e.

$$Agr(f_\theta, g_\phi) := \frac{1}{n_{test}} \sum_{(x,y) \in \mathcal{D}_{test}} \left[ argmax_i f_\theta(x)_i = argmax_i g_\phi(x)_i \right].$$

In practice, though, the adversary will generally not have access to $\mathcal{D}_{test}$. However, the adversary can create their own test set and compute the top-1 accuracy or agreement on this test set. Whilst PD samples with true labels are needed for computing the top-1 accuracy, the size of such a test set is typically very small in comparison with the size of a train set (otherwise the adversary could simply use their own test set as their train set instead of using the API access to $f_\theta$ to create the set D). Note that PD samples and true labels are not needed for computing the top-1 agreement, and that these computations use the API access to the network $f_\theta$

In contrast to the training of the target network $f_\theta$, the adversary can use PD samples and/or NPD samples for training the clone network $g_\phi$ since the API access to the target network $f_\theta$ can be used to obtain $f_\theta(y_i)$ for any $y_i \in \mathcal{X}$. For example, NPD samples are used in the cloning attacks on image classifiers presented in references [2], [3], and [4]. NPD samples are usually easy and cheap to obtain for an adversary. For example, if $f_\theta$ is an image classifier, then ImageNet (https://image-net.org/) is an example of a large, publicly available dataset that can be used to obtain NPD samples $y_i \in \mathcal{X}_1$.

After the functionality of the target network $f_\theta$ has been cloned, the adversary no longer needs to query the target network $f_\theta$. This enables the adversary to end their subscription to the service/product provided by the service provider, and the adversary may use their own clone network $g_\phi$ instead of the network $f_\theta$, for example, to set up their own competing service or to implement their own competing product. In addition, a clone network $g_\phi$ can be used to mount a different type of attack on the target network $f_\theta$, e.g. to compromise the privacy of data in $\mathcal{D}_{train}$ or to create transferable adversarial examples.

Several security measures aimed at preventing, detecting, and/or correcting neural network cloning attacks have been proposed as discussed below.

A first type of security measure truncates information when providing $f_\theta(x)$ to the user. Reference [1] suggests returning only the label $argmax_i f_\theta(x)_i$ instead of the vector $f_\theta(x)$. For use-cases in which the vector $f_\theta(x)$ needs to be returned, reference [1] suggests rounding each component $f_\theta(x)_i$ of $f_\theta(x)$ to a small number of decimals. Reference [2] also discusses this approach. In addition, reference [2] suggests returning only the top-K probabilities by retaining the K highest values $f_\theta(x)_i$ of $f_\theta(x)$ and zeroingout the other values.

A second type of security measure perturbates $f_\theta(x)$ before returning it to the user. For example, Taesung Lee et al: "Defending against NN Model Stealing Attacks using Deceptive Perturbations", 2nd Deep Learning and Security Workshop (DLS 2019), May 2019, San Francisco, CA proposes to add specific noise to the components of $f_\theta(x)$ before returning the output. This method preserves top-1 accuracy. The approach in Tribhuvanesh Orekondy et al: "Prediction Poisoning: Towards Defenses Against DNN Model Stealing Attacks", Eighth International Conference on Learning Representations (ICLR), Virtual Conference, 2020 actively perturbs predictions targeted at poisoning the training objective of the adversary. This approach is accuracy-constrained; in particular, it does not necessarily preserve top-1 accuracy.

A third type of security measure detects cloning attacks while they are being performed. Manish Kesarwani et al: "Model Extraction Warning in MLaaS Paradigm", ACSAC '18: Proceedings of the 34th Annual Computer Security Applications Conference, December 2018, pp. 371 - 380 discusses a method that quantifies the extraction status of a network. Two different ways to measure the amount of information extracted are discussed, both taking the query samples of users as input. The main goal is to detect if one or more users can construct a clone network that achieves a given accuracy on the test set. Mika Juuti et al: "PRADA: Protecting Against DNN Model Stealing Attacks", 2019 IEEE European Symposium on Security and Privacy (EuroS&P), Stockholm, Sweden, 2019, pp. 512 - 527 discusses a detection method based on the observations that several cloning attacks use specifically generated synthetic samples and that the distances between such samples have a distribution that differs from the one expected for queries having PD samples from honest users (which are modelled as random inputs with a Gaussian, i.e. normal, distance distribution). A disadvantage of this method is that it can require a large amount of memory to store query samples for each user.

The above discussion relates to the network $f_\theta$ being a classifier. However, as will be appreciated, there are many other types of neural network and the discussion above in relation to network cloning applies equally to such other types of neural network.

For example, the network $f_\theta$ may be an object detector. An object detector for images takes an image as input x and outputs zero or more predictions. An object detector typically first generates a predetermined number of predictions for x. This number is a parameter of $f_\theta$ and is denoted herein by $W$ with $W \geq 1$. Each prediction typically indicates/identifies: (i) a predicted type of object (i.e. a class label); (ii) a region, or bounding box, within the image x around the object (i.e. the area/position/location of the object in the image); and (iii) a confidence score indicating how confident the network $f_\theta$ is that the image x depicts an object of the predicted type within that bounding box. The set of predictions associated with x may therefore be represented by $\mathcal{P} = \{(t_i, b_i, c_i) \mid 1 \leq i \leq W\}$ where $t_i$ indicates the object type for object $O_i$, $b_i$ indicates the location or bounding box for object $O_i$, and $c_i$ indicates the confidence score for object $O_i$ (which we may assume here, without loss of generality, has $0 \leq c_i \leq 1$). It will be appreciated that, in some examples, the network $f_\theta$ does not need to indicate the object type $t_i$ (e.g. if there is only one type of object being detected). Likewise, it will be appreciated that, in some examples, the network $f_\theta$ does not need to indicate the location or bounding box $b_i$ (e.g. if the goal is merely to identify objects that are present, without caring about where they are located). The output $f_\theta(x)$ is a subset of the set of predictions P. This subset may be obtained by applying some filtering method to $\mathcal{P}$. For example, $f_\theta(x)$ may consist of all elements of P for which the confidence score exceeds some predetermined threshold value. The filtering method and the threshold are then also considered to be parameters of $f_\theta$. In this example, $f_\theta(x)$ may be the empty set, indicating that no objects were identified/detected. Another example of a filtering method is to only consider the predictions in $\mathcal{P}$ with a top-$K$ confidence score for some predetermined value of K with $1 \leq K \leq W$. The filtering method and K are then also considered to be parameters of $f_\theta$. As an example deployment scenario, an object detector may be used in a vehicle to detect different road signs in images captured by a camera of the vehicle. With image object detection, $\mathcal{X}$ is the set of all possible images; the set $\mathcal{X}_0$ of PD samples is the set of images that contain/represent one or more objects of one or more predetermined types (e.g. a road sign that is of one or more known/specified types of road sign); the set $\mathcal{X}_1$ of NPD samples is the set of images that do not contain/represent any objects of the one or more predetermined types (e.g. no road sign of the one or more known/specified types of road sign). An adversary could choose m distinct samples $y_i \in \mathcal{X}$ for $1 \leq i \leq m$ and use the API to the network $f_\theta$ to obtain, for each $y_i$ ($1 \leq i \leq m$), the zero or more predictions $f_\theta(y_i)$ generated by the network $f_\theta$, thereby generating the set $\mathcal{D} := \{(y_i, f_\theta(y_i)) \mid 1 \leq i \leq m\}$. The adversary may then use the set D to train the clone network $g_\phi$, i.e. to determine the value of the model $\phi$.

A mean Average Precision (mAP) value is typically used to measure the quality of an object detector. For example, the adversary may compute the mAP value of the target network $f_\theta$ and the mAP value of clone network $g_\phi$ on the same test set and compare these two values to assess the quality of the clone network.

Naturally, object detection can be performed on other types of data (e.g. audio data, text data, etc.).

As discussed above, network cloning (such as in references [1], [2], [3] and [4]) is very effective, and whilst various techniques for preventing, detecting, and/or correcting neural network cloning attacks exist, it would be desirable to provide improved and/or alternative techniques for achieving this.

## Summary of the invention

One of the main objectives of embodiments of the invention is to force the adversary to mainly use queries having PD samples for cloning (the functionality of) the target network $f_\theta$. To this end, embodiments of the invention aim to detect NPD queries and limit the number of NPD queries that are processed by the target network $f_\theta$. The adversary can be expected to be data-limited in that they do not have access to sufficiently many PD samples that represent the problem domain well. Consequently, due to the insufficient number of PD samples that the adversary is likely to have, along with the control being exercised over providing results back to a user based on NPD samples, it is impossible (or at least harder) for an adversary to generate a clone network $g_\phi$ (or at least one that is sufficiently comparable in terms of prediction quality to the target network $f_\theta$).

Compared to existing measures (such as those discussed above), embodiments of the invention have several desirable properties. More specifically, as detailed below, embodiments of the invention:

- Can protect neural networks/services that only return the label $argmax_i f_\theta(x)_i$;
- Can be top-1 accuracy preserving;
- Can be implemented without modifying the training phase of $f_\theta$;
- Enable the service provider to take action per accused user and do not affect non-accused users;
- Have limited per-user storage requirements; in particular, no query samples of users need to be stored;
- Can have a negligible computational overhead during their operational phase (where the operational phase occurs after the training phase of the network $f_\theta$, i.e. when the network $f_\theta$ is being used to generate outputs based on queries from one or more users).

According to a first aspect of the invention, there is provided a method of protecting an implementation of a neural network against a cloning attack, the neural network configured to generate a result based on an input sample from a predetermined domain of possible samples, the neural network trained to provide functionality corresponding to a subset of the domain, wherein the method comprises: receiving, from a user, a plurality of queries having a corresponding query sample from the domain and, for each query, performing a first test to determine whether or not the corresponding query sample is a member of the subset; performing a second test to identify whether the user is performing a cloning attack against the neural network, wherein the second test identifies that the user is performing a cloning attack against the neural network if a number of queries from the plurality of queries for which the corresponding query sample is determined to not be a member of the subset exceeds a first threshold value; and in response to the second test identifying that the user is performing a cloning attack against the neural network, performing one or more countermeasures for the cloning attack.

In some embodiments: (a) the functionality is based on a property of samples of the predetermined domain, and the corresponding subset is the set of samples from the predetermined domain for which that property satisfies one or more predetermined criteria; or (b) the functionality is classification of samples of the predetermined domain according to one or more classes, and the corresponding subset is the set of samples from the predetermined domain that belong to one or more of the one or more classes; or (c) the functionality is object detection, said object detection to detect one or more objects of one or more types within samples of the predetermined domain, and the corresponding subset is the set of samples from the predetermined domain that comprise at least one object of at least one of the one or more types.

In some embodiments: (a) performing one or more countermeasures comprises preventing the user from using or accessing the implementation of the neural network; or (b) performing one or more countermeasures comprises permitting the user to receive modified versions of responses generated by the neural network based on queries received from the user.

In some embodiments, the second test identifies that the user is not performing a cloning attack against the neural network if the number of queries from the plurality of queries for which the corresponding query sample is determined to not be a member of the subset does not exceed the first threshold value, and the method comprises: in response to identifying that the user is not performing a cloning attack against the neural network, permitting the user to receive responses generated by the neural network based on queries received from the user.

In some embodiments, the method comprises identifying the first threshold based on the number of queries in the plurality of queries and a target probability of incorrectly identifying that the user is performing a cloning attack against the neural network.

In some embodiments, performing the first test to determine whether or not the corresponding query sample is a member of the subset comprises performing a comparison of a first likelihood and a second likelihood, the first likelihood based on the query sample and a null hypothesis that the query sample is a member of the subset, the second likelihood based on the query sample and an alternative hypothesis that the query sample is not a member of the subset. Performing the first test to determine whether or not the corresponding query sample is a member of the subset may comprise computing the first likelihood based on $p_0(U(x))$ and computing the second likelihood based on $p_1(U(x))$, wherein $x$ is the corresponding query sample, $U$ is a function for distinguishing between samples of the domain that are members of the subset and samples of the domain that are not members of the subset, $p_0$ is a probability density function for $U(X_0)$ where $X_0$ is a random variable representing samples of the domain that are members of the subset, and $p_1$ is a probability density function for $U(X_1)$ where $X_1$ is a random variable representing samples of the domain that are not members of the subset. Performing the comparison of the first likelihood and the second likelihood may comprise comparing a ratio of the first likelihood and the second likelihood to a second threshold value - in some such embodiments: (a) the second threshold value is set so that a false positive probability of the first test equals a false negative probability of the test; or (b) the second threshold value is set so that a false positive probability of the first test is most a target false positive probability; or (c) the second threshold value is set so that a false negative probability of the first test is most a target false negative probability.

In some embodiments, the method comprises one or both of: (a) performing the first test each time a query is received from the user; and (b) performing the second test each time a query is received from the user.

In some embodiments, the method comprises performing the second test only after a predetermined number of queries have been received from the user.

In some embodiments, the method is performed by a system or device that (a) provides the implementation of the neural network or (b) provides access to the implementation of the neural network.

In some embodiments, the user is either (a) one or more human users or (b) one or more computing devices.

In some embodiments, the functionality is classification of samples of the predetermined domain according to one or more classes. In some such embodiments, the domain comprises samples that do not correspond to any of the one or more classes.

In some embodiments, the functionality is object detection, said object detection to detect one or more objects of one or more types within samples of the predetermined domain.

According to a second aspect of the invention, there is provided a system arranged to carry out a method according the first aspect or any embodiment thereof.

According to a third aspect of the invention, there is provided a computer program which, when executed by one or more processors, causes the one or more processors to carry out a method according the first aspect or any embodiment thereof. The computer program may be stored on a computer-readable medium.

## Brief description of the drawings

Embodiments of the invention will now be described, by way of example only, with reference to the accompanying drawings, in which:

Figure 1 schematically illustrates an example of a computer system;

Figures 2a and 2b schematically illustrate example attack scenarios for cloning attacks against a network $f_\theta$;

Figures 3a and 3b schematically illustrate embodiments of the invention based on the attack scenario shown in figures 2a and 2b respectively;

Figure 4 is a flowchart illustrating a method of protecting an implementation of a neural network $f_\theta$ against a cloning attack according to embodiments of the invention;

Figure 5 depicts an example distribution of the number of samples that are (incorrectly) classified by a hypothesis test as NPD samples; and

Figure 6 depicts the value of a false negative probability as a function of a number of submitted queries having NPD samples.

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

### 1 - Example computer system

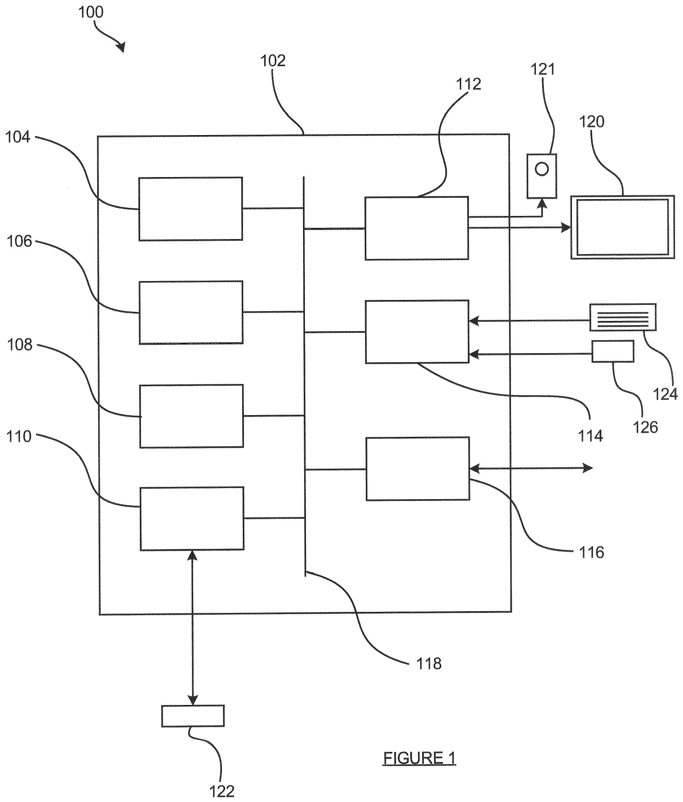

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which may be linked together over one or more communication buses 118.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc. The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

### 2 - Example attack scenarios and cloning detection/prevention

Embodiments of the invention build on the discussion set out above in relation to the network $f_\theta$ and, in particular, provide methods and systems for preventing cloning attacks against the network $f_\theta$, i.e. methods and systems that aim to prevent (or at least make it harder) for an attacker to create a clone network $g_\phi$ when the network $f_\theta$ is the target network. As discussed above, the network $f_\theta$ could be a network for classification, for object detection, or for any other purpose.

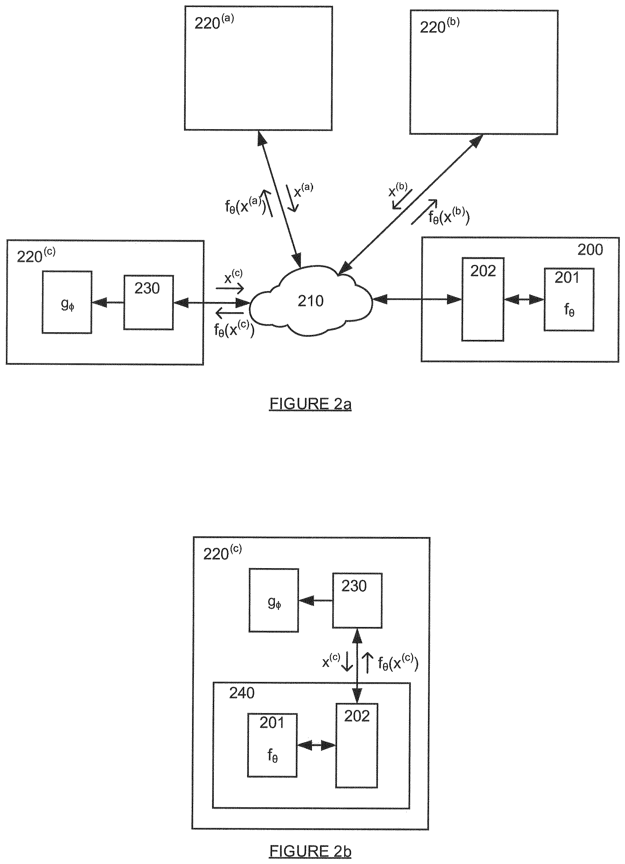

Figures 2a and 2b schematically illustrate example attack scenarios for cloning attacks against the network $f_\theta$.

In figure 2a, a service system 200 of the service provider comprises an API 202 and an implementation 201 of the network $f_\theta$. The API 202 is for providing access to the network $f_\theta$ via a communications network 210. For example, the communications network 210 could the internet (or any other data communication network), and the API 202 may be part of a website provided by the service system 200. The API 202 and the implementation 201 of the network $f_\theta$ may, for example, be implemented/hosted as a cloud service (e.g. using one or more computer systems 100 as discussed above with reference to figure 1).

Three users a, b, c are depicted in figure 2a as using a respective user device 220$^{(a)}$, 220$^{(b)}$, 220$^{(c)}$ to access the network $f_\theta$ via the API 202 (although it will be appreciated that other numbers of users and user devices 220 are envisaged too). Indeed, more than one user could use the same user device 220. The user devices 220$^{(a)}$, 220$^{(b)}$, 220$^{(c)}$

could, for example, be one or more computer systems 100 as discussed above with reference to figure 1. The users a, b, c provide one or more respective samples $x^{(a)}$, $x^{(b)}$, $x^{(c)}$ to the service system 200 via the API 202 (i.e. submit one or more queries or requests that specify/identify the respective query sample), and the service system 200 returns a corresponding output/result from (or generated by/using) the network $f_\theta$ to the users a, b, c via the API 202. In figure 2a, the output is depicted as being $f_\theta(x^{(a)})$, $f_\theta(x^{(b)})$, $f_\theta(x^{(c)})$, but it will be appreciated that, as discussed above, the output could be other information about $f_\theta(x^{(a)})$, $f_\theta(x^{(b)})$, $f_\theta(x^{(c)})$ instead (e.g. for classification networks $f_\theta$ this could be $argmax_i f_\theta(x^{(a)})_i$, $argmax_i f_\theta(x^{(b)})_i$, $argmax_i f_\theta(x^{(c)})_i$).

The architecture of the network $f_\theta$, such as the number of layers, the types of layer, and the values of the training parameters (e.g. the optimizer, the batch size, the learning rate, the learning rate decay, and the number of epochs), may or may not be known to the users a, b, c. The value of the model $\theta$ is unknown to the users a, b, c.

In figure 2a, the users a and b are honest/legitimate users. However, at least one of the users (in this example, the user c) wants to create a clone network $g_\phi$ i.e. wishes to generate the model $\phi$ so that the clone network $g_\phi$ provides the same (or similar) functionality/results as the target network $f_\theta$. In this case, the user c may use a system 230 (e.g. hardware and/or software of, or executing on, their user device 220$^{(c)}$) to create the clone network $g_\phi$ based on the samples $x^{(c)}$ that that user c provides to the service system 200 and the corresponding results that are returned back to the user c (e.g. using one or more of the cloning techniques discussed above). Such users are referred to herein as adversaries.

In figure 2b, the service provider has provided the user c with a product 240 (e.g. a software application or module) that the user device 220$^{(c)}$ of the user c may use/execute to provide the functionality of the network $f_\theta$ (i.e. locally at the user device 220$^{(c)}$ as opposed to via the communications network 210). In particular, in a similar manner to the example shown in figure 2a, the product 240 may comprise an implementation 201 of the network $f_\theta$ and an API 202. The product 240 may receive one or more samples $x^{(c)}$ via the API 202, may process those samples $x^{(c)}$ using the network $f_\theta$, and may then return an output from (or generated by/using) the network $f_\theta$ via the API 202. Again, the user c is an adversary, in that the user c may use a system 230 (e.g. hardware and/or software of, or executing on, their user device 220$^{(c)}$) to create the clone network $g_\phi$ based on the samples $x^{(c)}$ that user c provides to the product 240 and the corresponding results that are returned back to the user c (e.g. using one or more of the cloning techniques discussed above).

It will be appreciated that other attack scenarios for performing cloning attacks against the network $f_\theta$ exist, and that the examples shown in figures 2a and 2b are merely for illustration purposes.

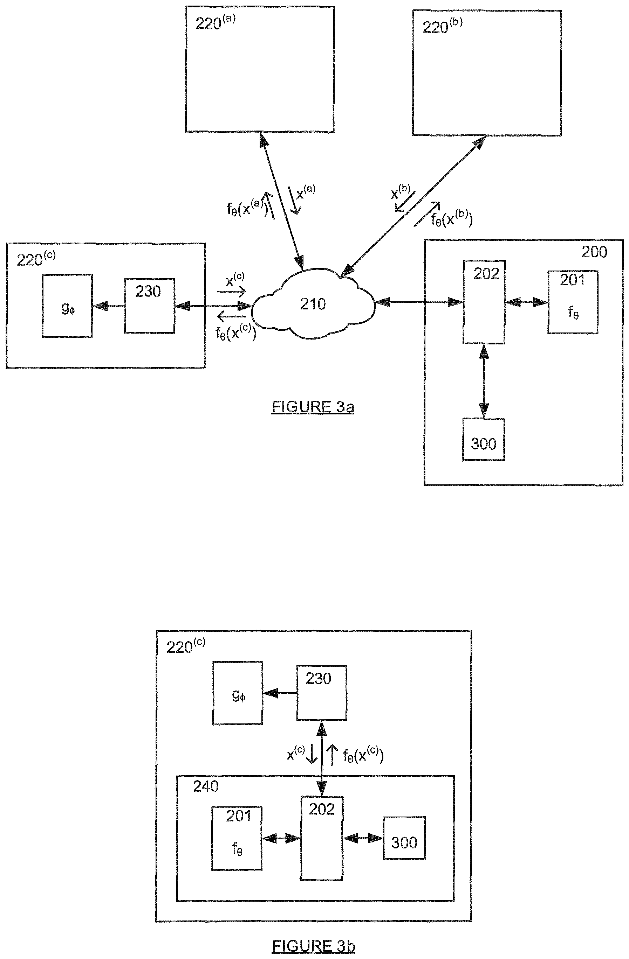

Figure 3a schematically illustrates an embodiment of the invention based on the attack scenario shown in figure 2a. In particular, as illustrated, the service system 200 comprises, or executes, a security module 300. The security module 300 monitors queries submitted by the users a, b, c (i.e. monitors queries for the network $f_\theta$ received at the API 202), analyses the queries (as discussed in more detail below) and, based on this analysis, may either permit/allow a response from (or generated by/using) the network $f_\theta$ to be provided back to the user or may prevent/block/disallow a response from (or generated by/using) the network $f_\theta$ from being provided back to the user.

In some embodiments, the response to a query may be generated by the network $f_\theta$ regardless of the processing by the security module 300, but the security module 300 may be arranged to control whether or not this response is actually sent back to the user based on the analysis - thus, the generation of the response using the network $f_\theta$ can be performed in parallel to the processing by the security module 300. In some embodiments, the response to a query may be generated by the network $f_\theta$ and sent back to the user regardless of the processing by the security module 300 in respect of that query, but the security module 300 may then be arranged to, based on the analysis of that query, control whether or not responses to subsequent queries from that user can be sent back to the user in future - this is useful if, for example, it is desirable to always provide a response within a certain response time threshold, and if analysis of a received query by the security module 300 may cause the response time to exceed that threshold (i.e. waiting for the security module 300 to finish its analysis is undesirable from the perspective of quality of service). In some embodiments the response to a query may be generated by the network $f_\theta$ only after the processing by the security module 300 had identified that a response may be sent back to the user.

To this end, the security module 300 may maintain an account for each user (e.g. in a database, not shown in figure 3a). Maintaining an account may comprise storing an indication of whether or not the corresponding user is performing (or has performed) a cloning attack against the network $f_\theta$, as well as storing various data (e.g. as discussed below) that the security module 300 generates based on the queries received from the user and which the security module 300 uses to determine whether or not the user is performing a cloning attack against the network $f_\theta$. In some embodiments, if it is determined that the user is performing (or has performed) a cloning attack against the network $f_\theta$, then the account may be updated to store an indication that the user is not authorized to receive results generated by the network $f_\theta$ or is only allowed to receive modified versions (e.g. less useful/accurate versions) of results generated by the network $f_\theta$; likewise if it is determined that the user is not performing (or has not performed) a cloning attack against the network $f_\theta$, then the account may store an indication that the user is authorized to receive results (or "full"/non-modified results) generated by the network $f_\theta$.

Likewise, figure 3b schematically illustrates an embodiment of the invention based on the attack scenario shown in figure 2b. In particular, as illustrated, the product 240 comprises a security module 300. The security module 300 of the product 240 operates in the same way as the security module 300 in figure 2a. In particular, the security module 300 monitors queries submitted by the user c (i.e. monitors queries for the network $f_\theta$ received at the API 202), analyses the queries (as discussed in more detail below) and, based on this analysis, may either permit/allow a response from (or generated by/using) the network $f_\theta$ to be provided back to the user c or may prevent/block/disallow a response from (or generated by/using) the network $f_\theta$ from being provided back to the user. To this end, the security module 300 may maintain an account for the user c (e.g. in a database, not shown in figure 3b). Maintaining an account may comprise storing an indication of whether or not the corresponding user c is performing (or has performed) a cloning attack against the network $f_\theta$, as well as storing various data (e.g. as discussed below) that the security module 300 generates based on the queries received from the user c and which the security module 300 uses to determine whether or not the user c is performing a cloning attack against the network $f_\theta$. In some embodiments, if it is determined that the user c is performing (or has performed) a cloning attack against the network $f_\theta$, then the account may be updated to store an indication that the user c is not authorized to receive results generated by the network $f_\theta$ or is only allowed to receive modified versions (e.g. less useful/accurate versions) of results generated by the network $f_\theta$; likewise if it is determined that the user c is not performing (or has not performed) a cloning attack against the network $f_\theta$, then the account may store an indication that the user c is authorized to receive results (or "full"/non-modified results) generated by the network $f_\theta$.

As mentioned, attack scenarios for cloning attacks against the network $f_\theta$ other than those shown in shown in figures 2a and 2b exist. It will be appreciated that the security module 300 may be used in such other attack scenarios (namely to monitor queries received from a user and, based on analysis of the received queries, control whether or not responses generated using the network $f_\theta$ are to be provided back to the user).

Whilst the discussion herein is based on monitoring queries at the user level, and controlling, at the user level, whether or not responses to queries should be provided back to users, it will be appreciated that such monitoring and control could be performed at the user device level, i.e. monitoring queries at the device level, and controlling, at the device level, whether or not responses to queries should be provided back to device. For example, it is possible to identify specific users (so that control may be performed at the user level) - e.g. by the API 202 requiring a user to login before access to the network $f_\theta$ is provided. Likewise, it is possible to identify specific devices (e.g. based on a MAC address or other identification information for the user device 220 that may be available to the API 202). Thus, a "user" as referred to herein may be one or more human users or one or more computing devices.

In the above discussion of figures 3a and 3b, the security module 300 is arranged to prevent/deny a response from being provided back to the user if, based on the analysis performed, the security module 300 concludes that an attack is being performed against the network $f_\theta$. Instead of this being the approach taken in response to concluding that an attack is being performed, the security module 300 may, in other embodiments, permit/allow a response to be provided back to the user, but the response that gets provided back to the user may be a modified version of the output from the network $f_\theta$ (as shall be discussed in more detail later) if the security module 300 concludes that an attack is being performed against the network $f_\theta$. The above discussion of figures 3a and 3b still applies analogously to such other embodiments.

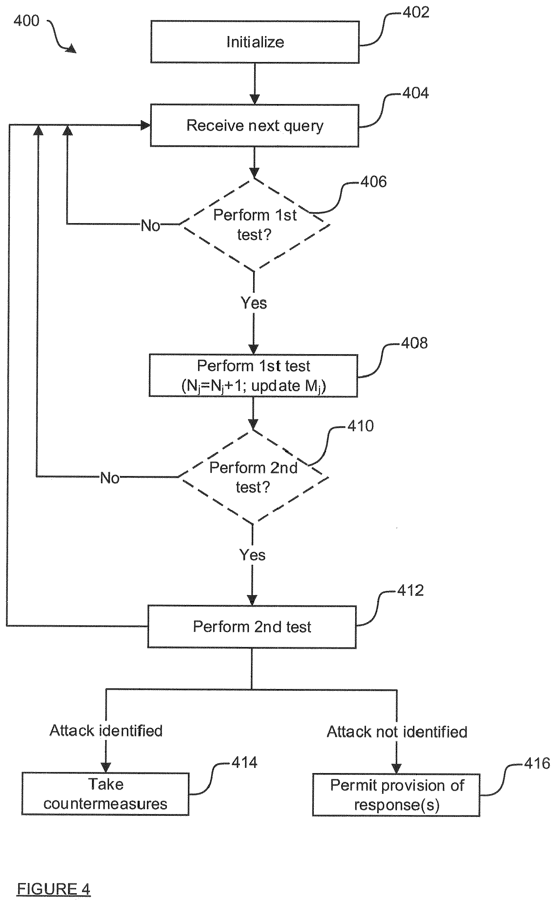

Figure 4 is a flowchart illustrating a method 400, according to embodiments of the invention, of protecting an implementation 201 of a neural network $f_\theta$ against a cloning attack. The method 400 may be performed by the security module 300 (e.g. as deployed in the scenarios shown in figures 3a and 3b, although it will be appreciated that the method 400 may be used in other scenarios too). The method 400 illustrates processing performed in respect of a single user, namely user j, but it will be appreciated that the same processing may be performed for each user that submits queries for processing by the neural network $f_\theta$.

As discussed above, the neural network $f_\theta$ is configured to generate a result $f_\theta(x)$ based on an input sample x from a predetermined domain $\mathcal{X}$ of possible inputs to the network $f_\theta$. In general, users (such as the user j) can submit queries to the network $f_\theta$ (e.g. via the API 202), where the query has (or is or represents or identifies) a corresponding query sample $x \in \mathcal{X}$. Information about $f_\theta(x)$ for a query sample $x \in \mathcal{X}$ may be returned to the user (e.g. via the API 202) if the query is received from an authorized user, and the information about $f_\theta(x)$ is not returned to the user if the query did not originate from an authorized user. For classifier networks $f_\theta$ the information returned to the user may be only the label $argmax_i f_\theta(x)_i$ - whilst returning more information about $f_\theta(x)$ may reduce the security level offered, embodiments of the invention may still be used when more information about $f_\theta(x)$ (e.g. the whole vector) is provided to the user. For object detection networks $f_\theta$, the information returned to the user may, if no objects are detected in the query sample x, be an indication that no objects are detected, or may, if one or more objects are detected in the query sample x, be information specifying (at least in part) some or all of the predictions (as discussed above).

As discussed above, the predetermined domain $\mathcal{X}$ of possible inputs to the network $f_\theta$ depends on the task for which the network $f_\theta$ has been generated/designed. For example: if the network $f_\theta$ is intended to classify images based on their content (i.e. based on what those images depict), then the predetermined domain $\mathcal{X}$ may be the set of all possible images; if the network $f_\theta$ is intended to classify text-based files based on their content (i.e. based on the information conveyed or represented by those files), then the predetermined domain $\mathcal{X}$ may be the set of all possible text-based files; if the network $f_\theta$ is intended to classify songs to identify their genre, then the predetermined domain $\mathcal{X}$ may be the set of all possible audio files; if the network $f_\theta$ is intended to detect objects in images based on their content (i.e. based on what those images depict), then the predetermined domain $\mathcal{X}$ may be the set of all possible images; etc.

Additionally, as discussed above, the neural network $f_\theta$ has been trained to provide functionality corresponding to a subset $\mathcal{X}_0$ of the domain $\mathcal{X}$ - elements of this subset $\mathcal{X}_0$ are the PD samples. For example, the functionality may be classification of samples x according to k classes, in which case the subset $\mathcal{X}_0$ is the set of samples from the domain $\mathcal{X}$ that belong to one or more of those classes. Similarly, the functionality may be object detection, to detect one or more objects of one or more known/predetermined types within a sample x, in which case the subset $\mathcal{X}_0$ is the set of samples from the domain X that comprise (or depict or represent) at least one object of at least one of the one or more known/predetermined types. More generally, the functionality may be based on a property of a sample x (e.g. it's class, whether or not it depicts a given type of object, etc.), and the subset $\mathcal{X}_0$ is the set of samples from the domain $\mathcal{X}$ for which that property satisfies one or more predetermined criteria (according to the task the neural network $f_\theta$ has been trained to achieve, e.g. a criterion that the class of a sample is one or more predetermined classes, or a criterion that a sample depicts one or more objects of one or more predetermined types).

The method 400 begins with an initialization step 402. For example, this may involve initializing an account for the user $j$, which could comprise setting $M_j = 0$ and $N_j = 0$, where $M_j$ is the number of queries received from the user j that have been classified as having an NPD query sample at a step 408 (discussed below), and where $N_j$ is the total number of queries received from the user j that have been tested at the step 408.

At a step 404, a query for a corresponding query sample x from the domain $\mathcal{X}$ is received from user $j$, for example via the API 202.

At an optional step 406, a decision is made as to whether or not to perform a first test (the first test being to determine whether or not the corresponding query sample $x$ for the query received at the step 404 is a member of the subset $\mathcal{X}_0$ ). This step is optional as, in some embodiments, the first test may be performed for each query received from user $j$, whilst in some other embodiments, the first test may be performed for only some of the queries received from user $j$. For example, in some embodiments, *user j* may already be a user for which responses from the neural network $f_\theta$ are prohibited/disallowed, in which case the subsequent process of the method 400 may be omitted. Additionally or alternative, in some embodiments, queries from user j may be tested intermittently or periodically. For example, for a probability $p$ with $0 < p < 1$, test each received query with probability p, or, as another example, for an integer L > 1, and for each $i \in \{0, 1, 2, ..., \lfloor(n_j - 1)/L\rfloor\}$ where $n_j$ is the total number of queries received from user j, select a secret number $k_i^{(j)}$ uniformly at random from the set $\{1, 2, ..., L\}$ and only test query $iL + k_i^{(j)}$ of the queries $iL + 1, iL + 2, ..., (i + 1)L$ from *user j*.

If the first test is not performed for the received query, then processing may return to the step 404 at which a further/subsequent query may be received from user $j$.

Otherwise, processing continues to a step 408 at which the first test is performed. Thus, $N_j$ may be incremented by 1. Therefore, this will be the $N_j^{\text{th}}$ query sample for the user $j$ for which the first test is performed - this query sample shall be denoted as sample $x_{N_j}^{(j)}$ . As discussed above, the first test is aimed at determining whether or not the received query sample $x_{N_j}^{(j)}$ is a member of the subset $\mathcal{X}_0$ (i.e. is a Problem Domain (PD) sample). Consequently, $M_j$ may be incremented by 1 if the first test determines that the received query sample $x_{N_j}^{(j)}$ is not a member of the subset $\mathcal{X}_0$ , whereas $M_j$ may remain unchanged if the first test determines that the received query sample $x_{N_j}^{(j)}$ is a member of the

subset $\mathcal{X}_0$. In this way, the account for user j may be updated.

Examples of how the first test may be performed are set out in detail later.

At an optional step 410, a decision is made as to whether or not to perform a second test (referred to herein as an accusation test). The second test is aimed at identifying whether *user j* is performing a cloning attack against the neural network $f_\theta$, where this involves identifying that user j is performing an attack against the neural network $f_\theta$ if the number $M_j$ of queries from the plurality of queries received from *user j* for which the corresponding query sample is determined (by the first test at the step 408) to not be a member of the subset $\mathcal{X}_0$ exceeds a first threshold value Z.

This step is optional as, in some embodiments, the second test may be performed each time the first test is performed, or may be performed only when $M_j$ is incremented (i.e. when the first test determines that the query sample $x_{N_j}^{(j)}$ is not a member of the subset $\mathcal{X}_0$), or only after a predetermined number of query samples for the user j have been tested at the step 408 (i.e. only when $N_j > S$) for some positive integer $S$.

If the second test is not performed for the received query, then processing may return to the step 404 at which a further/subsequent query may be received from user *j*; otherwise processing continues at a step 412 at which the second test is performed, and processing may then return to the step 404 at which a further/subsequent query may be received from user j.

Examples of how the second test may be performed are set out in detail later.

As can be seen, therefore, a plurality of queries for classification of a corresponding query sample from the domain $\mathcal{X}$ are received and tested via the first and second tests.

As previously indicated, cloning attacks typically use NPD samples (i.e. queries x with $x \in \mathcal{X}_1$). This is because it is either difficult (i.e. expensive in terms of money and/or time) or impossible for the adversary to obtain sufficient PD samples that represent the problem domain well (or at least well enough to enable the adversary to generate a sufficiently accurate model themselves, trained using those PD samples). Existing cloning techniques therefore typically either use a relatively small number of PD samples and a relatively large number of NPD samples, or they use NPD samples only. As discussed above, NPD samples are usually easily available, e.g. from a publicly available database. In contrast to this, honest users are expected to submit queries having PD samples only. In particular, receiving a relatively large number of queries having NPD samples from one or more users indicates that the network $f_\theta$ is under attack. Thus, the method 400 provides an effective method of identifying whether the user j is performing a cloning attack against the network $f_\theta$

As illustrated in figure 4, there are various possible results of the second test performed at the step 412.

For example, as set out above, the second test identifies that user j is performing a cloning attack against the neural network $f_\theta$ if the number $M_j$ of queries from the plurality of queries received from user j for which the corresponding query sample is determined (by the first test at the step 408) to not be a member of the subset $\mathcal{X}_0$ exceeds a first threshold value Z, i.e. if $M_j > Z$. In this case, (i.e. in response to the second test identifying that user *j* is performing a cloning attack against the neural network $f_\theta$), the method 400 involves performing, at a step 414, one or more countermeasures for the attack. Such countermeasures may take a variety of forms. For example, user *j* could be deauthorized, so that the security module 300 no longer permits responses from the neural network $f_\theta$ to be provided to user *j*, thereby preventing user *j* from using the implementation 201 of the neural network $f_\theta$ Additionally or alternatively, the API 202 could be configured to deny *user j* access to the neural network $f_\theta$ Additionally or alternatively, the security module 300 could permit user *j* to receive modified responses generated by the neural network $f_\theta$ based on queries received from that user (thereby making it harder for the cloning attack to produce a viable network $g_\phi$). Such modified responses may then be provided back to user *j* via the API 202. The modified response may be, for example, a false result (e.g. a purely random response). The modified response may be, for example, a randomized version of the result (e.g. with one or more components of the result randomized). The modified response may be, for example, the above-described perturbated versions of the result $f_\theta(x)$. The modified response may be, for example, a truncated version of the result $f_\theta(x)$ and/or only the top-K probabilities of a classification result (i.e. the K highest values $f_\theta(x)_i$ of $f_\theta(x)$ and the corresponding labels for some predetermined integer K). In case of an object detector, the modified response may include, for example, one or more modified class labels and/or one or more modified bounding boxes and/or one or more modified confidence scores and/or a reduced number of predictions and/or a number of false predictions. Additionally or alternatively, the service provider may launch an investigation into user *j* (which may involve still permitting user *j* to use the neural network $f_\theta$ whilst additional evidence is gathered in relation to user *j*).

Similarly, the second test may identify that the user is not performing a cloning attack against the neural network $f_\theta$ if the number $M_j$ of queries from the plurality of queries for which the corresponding query sample is determined (by the first test at the step 408) to not be a member of the subset $\mathcal{X}_0$ does not exceed the first threshold value $Z$, i.e. if $M_j \leq Z$. In this case, (i.e. in response to the second test identifying that user $j$ is not performing a cloning attack against the neural network $f_\theta$), the method 400 involves the security module 300, at a step 416, permitting user $j$ to receive responses generated by the neural network $f_\theta$ based on queries received from that user. Such responses may then be provided back to user $j$ via the API 202.

### 3 - Example first tests, for distinguishing PD samples from NPD samples (determining whether or not a query sample is in $\mathcal{X}_1$)

Let $U: \mathcal{X} \rightarrow \mathbb{R}$ be a function for distinguishing PD samples from NPD samples. In some embodiments, $U(x)$ may be based on one or more components of $f_\theta(x)$. For example, with a classifier network $f_\theta$, the function $U$ can be based on the maximum softmax probability, so that $U(x) = 1 - max f_\theta(x)_i$.

In some embodiments, $U(x)$ may be based on intermediate results of the computation of $f_\theta(x)$. For example,

$$U(x) = 1 - \max_i c_i$$

with an object detection network $f_\theta$, the function $U$ can be .

More generally, the function U can be based on any uncertainty quantification technique that measures or indicates an uncertainty of $f_\theta(x)$ - intuitively, the more uncertain the network $f_\theta$ is about its output, the more likely it is that the corresponding input sample $x$ is an NPD sample, and this can be leveraged for the function $U$. For example, the function U may be based on the well-known entropy function. In this case, with a classifier network $f_\theta$,

$$U(x) = -\sum_{i=1}^{k} f_\theta(x)_i \, log_2 f_\theta(x)_i$$

. Whilst this equation uses $log_2$, it will be appreciated that other logarithms could be used instead - for example, one could scale $U(x)$ by a factor $1 / log_2 k$ so that the range of $U$ equals $[0,1]$, and this is equivalent to using $log_k$ in the equation above. Many other uncertainty quantification techniques are known, as set out in Moloud Abdar et al: "A Review of Uncertainty Quantification in Deep Learning: Techniques, Applications and Challenges", Information Fusion, Volume 76, December 2021, pp. 243 - 297, and such techniques could be used for the function U. As mentioned, sometimes one of the classes, say class j, represents NPD samples - in this case, one may set $U(x) = f_\theta(x)_j$.

In the above examples, a low value for $U(x)$ suggests that the input sample $x$ is a PD sample, whereas a high value for $U(x)$ suggests that the input sample $x$ is an NPD sample - however, this is not required and other arrangements for the function $U(x)$ could be used instead.

The task of determining whether a sample $x \in \mathcal{X}$ is in $\mathcal{X}_0$ or in $\mathcal{X}_1$ can be formulated as a binary hypothesis test in which the null hypothesis $H_0$ is that $x \in \mathcal{X}_0$ (i.e. $x$ is a PD sample), and in which the alternative hypothesis $H_1$ is that $x \in \mathcal{X}_1$ (i.e. $x$ is an NPD sample). One possible hypothesis test is to compare the likelihoods p(x | $H_0$) and $p(x | H_1)$ where p(x | $H_i$) for $i = 0,1$ is the probability density function for the hypothesis $H_i$ evaluated for the input x, for example by calculating the likelihood ratio

$$r(x) = \frac{p(x \mid H_0)}{p(x \mid H_1)}$$

The value of r(x) may be compared with a threshold $T$, and $H_0$ is accepted (i.e. it is concluded that $x \in \mathcal{X}_0$) if $r(x) > T$, whereas $H_1$ is accepted and $H_0$ is rejected (i.e. it is concluded that $x \in \mathcal{X}_1$) if $r(x) < T$. It will be appreciated that the decision on whether to accept or reject $H_0$ if r(x) = $T$ is a design choice.

Determination of the likelihoods $p(x | H_0)$ and $p(x | H_1)$ may be based on the function $U(x)$ above. Let the random variables $X_0$ and $X_1$ represent samples in $\mathcal{X}_0$ and $\mathcal{X}_1$, respectively. Further, let the probability density function of $U(X_i)$ for $i = 0,1$ be denoted by $p_i(z)$. The likelihoods p(x | $H_0$) and p(x | $H_1$) may be computed as $p(x | H_0) = p_0(U(x))$

and p(x | $H_1$ ) = $p_1(U(x))$.

Let $q_0$ and $q_1$ denote the probability density functions of the random variables $r(X_0)$ and $r(X_1)$ respectively. Further, let $Q_0$ and $Q_1$ denote the corresponding cumulative distribution functions of $q_0$ and $q_1$ i.e. $Q_0(z) = Pr(r(X_0) \leq z)$ and $Q_1(z) = Pr(r(X_1) \leq z)$.

A Type I error (or a false rejection or false positive) happens when $H_0$ is true but is rejected, i.e. $x$ is a PD sample ( $x \in \mathcal{X}_0$ ), but the hypothesis test incorrectly concludes that $x$ is an NPD sample ( $x \in \mathcal{X}_1$ ). The probability, $p_{FP}$, of a Type I error may therefore be expressed as $p_{FP}(t) = Pr(r(X_0) \leq t) = Q_0(t)$ (where $t$ parameterizes this expression for $p_{FP}$ and represents the parameterized threshold $T$).

A Type II error (or a false acceptance or false negative) happens when $H_0$ is false but is accepted, i.e. $x$ is an NPD sample ( $x \in \mathcal{X}_1$ ), but the hypothesis test incorrectly concludes that x is a PD sample ( $x \in \mathcal{X}_0$ ). The probability, $p_{FN}$, of a Type II error may therefore be expressed as $p_{FN}(t) = Pr(r(X_1) > t) = 1 - Q_1(t)$ (where t parameterizes this expression for $p_{FN}$ and represents the parameterized threshold $T$).

$p_{FP}(t)$ and/or $p_{FN}(t)$ may be used (e.g. by the service provider) to define the value of $T$. For example, one may select $T$ to be the value of $t$ for which $p_{FP}(t) = p_{FN}(t)$. This probability is referred to as the Equal Error Rate (EER). Alternatively, there may be a target false positive probability, in which case one may select $T$ to be a value of $t$ for which $p_{FP}(t)$ is at most that target false positive probability. For example, one may select $T$ to be the value of t for which $p_{FP}(t)$ is at most the target false positive probability and the value of $p_{FN}(t)$ is as small as possible. Likewise, there may be a target false negative probability, in which case one may select $T$ to be a value of $t$ for which $p_{FN}(t)$ is at most that target false negative probability. For example, one may select $T$ to be the value of t for which $p_{FN}(t)$ is at most the target false negative probability and the value of $p_{FP}(t)$ is as small as possible.

In practice, $p_0$ and $p_1$ can be determined or approximated using a set of PD samples and a set of NPD samples - this could be, done, for example, by the service provider, who has access to both PD samples, NPD samples and the network $f_\theta$. An independent set of PD samples and an independent set of NPD samples can then be used together with the hypothesis test and the approximations of $p_0$ and $p_1$ to select a suitable value of T as discussed above, e.g. based on the EER. This may be performed (e.g. by the service provider) as part of a one-time setup of embodiments of the invention. Note that PD samples are already available to the service provider since $x_i$ of each $(x_i, \phi(x_i)) \in \mathcal{D}_{test}$ is such a sample, and that the true labels $\phi(x_i)$ are not needed in these computations. As indicated above, NPD samples are typically easy to obtain.

Example 1: The "Simple MNIST convnet" (see https://keras.io/examples/vision/mnist_convnet/) was trained using the MNIST train set comprising 60,000 images with corresponding labels (see https://keras.io/api/datasets/mnist/ for more information about the MNIST dataset). Next, the 10,000 images of the MNIST test set were used as PD samples. This set of images was partitioned into a set of 7,000 images and a set of 3,000 images. The first set was used to approximate $p_0$. Next, the 70,000 images of the Fashion MNIST dataset (see https://keras.io/api/datasets/fashion_mnist/) were used as NPD samples. This set was partitioned into a set of 67,000 images and a set of 3,000 images. The first set was used to approximate the probability density function $p_1$. Finally, the 3,000 PD samples, the 3,000 NPD samples, the hypothesis test, and the approximations of $p_0$ and $p_1$ were used to determine the EER and a corresponding value of T for these two sets and approximations. The experiments resulted in EER $\approx 0.04$ for T $\approx 0.8$.

Note that different hypothesis tests from that mentioned above could be used to distinguish PD samples from NPD samples. However, a well-known lemma of Neyman and Pearson shows that the likelihood ratio test is optimal if the likelihood functions are known. Although in practice typically only approximations of these functions will be available, this lemma does indicate that the likelihood ratio test will generally be a good choice.

The logarithm of the likelihood ratio, also referred to as the log-likelihood ratio, could be used instead of the ratio itself. This may be useful, for example, if the log-likelihood ratios of $X_0$ and $X_1$ can be assumed to follow normal distributions.

During the operational phase, the analysis performed by the security module 300 may comprise using the above-mentioned hypothesis test for a (or in some embodiments, each) query received via the API 202, i.e. for a query requesting processing/classification of a query sample $x \in \mathcal{X}$ by the network $f_\theta$. In other words, the analysis performed by the security module 300 at the step 408 may comprise using the above-mentioned hypothesis test on received query samples $x \in \mathcal{X}$ to classify those query samples as being PD or NPD samples. The corresponding computational overhead of processing such queries by the security module 300 depends on the specific choice of the uncertainty quantification technique (i.e. the choice of the function $U(x)$ above). For the above example functions $U(x)$, the computational costs of the hypothesis test will generally be negligible compared to computing $f_\theta(x)$. Moreover, in some embodiments, the output may be returned to the user before the hypothesis test is performed. This can prevent any delay in providing the answer to a query. As discussed later, the cost of this is that a user who should have been accused, based on the outcome of the hypothesis test above and outcome of the second test at the step 412, can receive the (unmodified) answer to one additional query having an NPD sample.

In some embodiments, an alternative example hypothesis test is used in which the value of $U(x)$ is compared with a threshold $T'$, and $H_0$ is accepted (i.e. it is concluded that $x \in \mathcal{X}_0$) if $U(x) < T'$, whereas $H_1$ is accepted and $H_0$ is rejected (i.e. it is concluded that $x \in \mathcal{X}_1$) if $U(x) > T'$. Again, it will be appreciated that the decision on whether to accept or reject $H_0$ if $U(x) = T'$ is a design choice. As above, let the random variables $X_0$ and $X_1$ represent samples in $\mathcal{X}_0$ and $\mathcal{X}_1$, and let the probability density function of $U(X_i)$ for $i = 0,1$ be denoted by $p_i(z)$. Further, let the corresponding cumulative distribution functions be denoted by $P_0$ and $P_1$, i.e. $P_0(z) = Pr(U(X_0) \le z)$ and $P_1(z) = Pr(U(X_1) \le z)$.

The probability $p'_{FP}$ of a Type I error is $p'_{FP}(t) = Pr(U(X_0) > t) = 1 - P_0(t)$, (where $t$ parameterizes this expression for $p'_{FP}$ and represents the parameterized threshold $T'$).

The probability $p'_{FN}$ of a Type II error equals is $p'_{FN}(t) = Pr(U(X_1) \le t) = P_1(t)$, (where t parameterizes this expression for $p'_{FN}$ and represents the parameterized threshold T').

As before, $p'_{FP}(t)$ and/or $p'_{FN}(t)$ may be used (e.g. by the service provider) to define the value of $T'$. For example, one may select $T'$ to be the value of $t$ for which $p'_{FP}(t) = p'_{FN}(t)$ (i.e. based on the EER). Alternatively, there may be a target false positive probability, in which case one may select $T'$ to be a value of $t$ for which $p'_{FP}(t)$ is at most that target false positive probability. For example, one may select $T'$ to be the value of $t$ for which $p'_{FP}(t)$ is at most the target false positive probability and $p'_{FN}(t)$ is as small as possible. Likewise, there may be a target false negative probability, in which case one may select $T'$ to be a value of $t$ for which $p'_{FN}(t)$ is at most that target false negative probability. For example, one may select $T'$ to be the value of $t$ for which $p'_{FN}(t)$ is at most the target false negative probability and $p'_{FP}(t)$ is as small as possible.

As an alternative example, in case of an object detector, the function $U(x) = 1 - max \ c_i$ and one of the hypothesis tests described above can be used for the i first test at the step 408 to distinguish PD samples from NPD samples. For example, if $U(x) > T''$ for a threshold $T''$, then the first test at the step 408 may determine that the query sample x is an NPD sample; otherwise, the first test at the step 408 may determine that the query sample x is a PD sample.

As yet another alternative example, a separate classification neural network $h$ may be trained to classify samples $x \in \mathcal{X}$ as being either a PD sample or an NPD sample. This neural network would be trained using a set of PD samples (labelled as PD samples) and a set of NPD samples (labelled as NPD samples). To approximate the value of the probability of a Type I error, the PD samples $x$ of the test set $\mathcal{D}_{test}$ (or some other set of PD samples) could be input to this neural network $h$, with the probability of a Type I error being the proportion that are labelled by the neural network $h$ as NPD samples. To approximate the value of the probability of a Type II error, a number of NPD samples may be input to this neural network $h$, with the probability of a Type II error being the proportion that are labelled by the neural network $h$ as PD samples.

### 4 - Example second tests, for determining whether or not a cloning attack is being performed

As discussed above, the query samples of user j that undergo the first test (at the step 408) are denoted by $x_1^{(j)}, x_2^{(j)}, ...., x_{N_j}^{(j)}$, and the method 400 stores and maintains two values for user j (e.g. stored and updated by the security module 300 as part of storing/maintaining an account for user $j$): the total number $N_j$ of received query samples to which the first test is applied at the step 408, and the number of query samples of user j that were classified by the first test as NPD samples, denoted by $M_j$. The number $M_j$ may be referred to as the accusation score of user $j$.

In the analysis below, PD query samples are modelled as being independent and identically distributed, and these samples are assumed to be drawn from the same distribution as the PD samples that were used to set up the first test. NPD query samples are also modelled as being independent and identically distributed, and these samples are assumed to be drawn from the same distribution as the NPD samples that were used to set up the first test.

Let $\alpha$ be the false positive probability for the first test used at the step 408. Further, for a given value of $N_j$, let the random variable $Y$ represent the number of query samples of user $j$ that are classified as NPD samples. If user $j$ is an honest user, submitting PD query samples only, then $Y$ follows a binomial distribution $Y \sim B(N_j, \alpha)$.

If k is an integer, then the corresponding cumulative distribution function is given by

$$F\left(k \mid N_j, \alpha\right) = Pr\left(Y \le k \mid N_j, \alpha\right) = \sum_{i=0}^{k} \binom{N_j}{i} \alpha^i (1-\alpha)^{N_j - i}$$

It is well-known (e.g. https://en.wikipedia.org/wiki/Binomial_distribution) that the binomial distribution above can be approximated by the normal distribution

$$\mathcal{N}\left(N_j\alpha, N_j\alpha(1-\alpha)\right)$$

if

$$N_j > 9\left(\frac{1-\alpha}{\alpha}\right)$$

and

$$N_j > 9\left(\frac{\alpha}{1-\alpha}\right)$$

This means that, under these conditions,

$$F\left(k \mid N_j, \alpha\right) \approx \frac{1}{2}\left(1 + erf\left(\frac{k - N_j\alpha}{\sqrt{2N_j\alpha(1-\alpha)}}\right)\right)$$

where $erf(z)$ is the well-known error function

$$erf(z) = \frac{2}{\sqrt{\pi}} \int_0^z e^{-t^2} dt$$

In practice, the two conditions above will be easily satisfied in case of a network cloning attack (under the assumption that sufficiently many query samples of user j undergo the first test at the step 408). For example if $\alpha$ = 0.05, then the conditions reduce to $N_j$ > 171, which is much smaller than the number of queries required in a cloning attack (which typically requires 10,000s to 100,000s of queries).

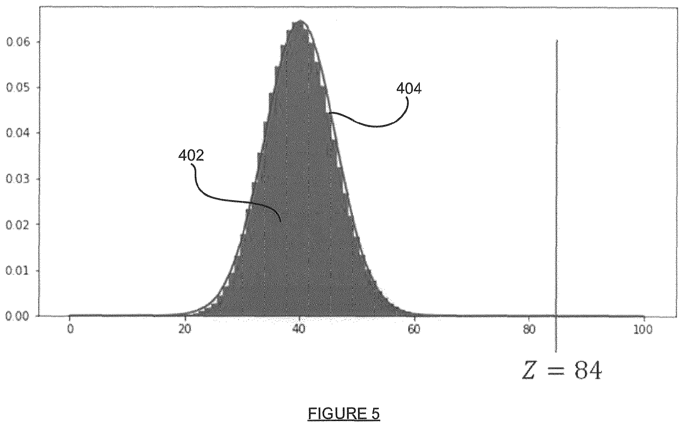

Example 2: Figure 5 depicts the distribution of the number of samples that are (incorrectly) classified by the first test at the step 408 as NPD samples if an honest user submits 1,000 PD query samples and no NPD query samples that are tested at the step 408, (i.e. $N_j$ = 1,000) and if $\alpha$ = 0.04 (i.e. the value of $\alpha$ in this example is the same as in Example 1 above). The vertical bars 502 represent the binomial distribution, and the line 504 represents its approximation by a normal distribution.

The probability of a false accusation (i.e. a false positive if the null hypothesis is that the user is honest) is preferably small, so that service providers (or the security modules 300) do not accuse honest users. To this end, the service provider can select a small value $\delta$ during a one-time setup of an embodiment of the invention and require that this probability is at most $\delta$, i.e. user $j$ is accused if and only if 1 - $F(M_j \mid N_j, \alpha) \le \delta$, i.e. if and only if $F(M_j \mid N_j, \alpha) \ge 1 - \delta$.

Equivalently, if an accusation threshold Z denotes the value of k for which $F(Z \mid N_j, \alpha) < 1 - \delta$ and $F(Z + 1 \mid N_j, \alpha) \ge 1 - \delta$ then user $j$ is accused if and only if $M_j > Z$. To see this, note that a cumulative distribution function is a non-decreasing (i.e. monotonically increasing) function. It follows that $M_j > Z \Rightarrow M_j \ge Z + 1 \Rightarrow F(M_j \mid N_j, \alpha) \ge F(Z + 1 \mid N_j, \alpha) \ge 1 - \delta$. That is, user $j$ is accused in this case. Furthermore, $M_j \le Z \Rightarrow F(M_j \mid N_j, \alpha) \le F(Z \mid N_j, \alpha) < 1 - \delta$. That is, user j is not accused in this case.

Example 3: Assuming the same setting as in Example 2 above, and selecting $\delta$ = $10^{-1}$ results in Z = 84. This means that a user who submitted 1,000 query samples to which the first test is applied at the step 408 will be accused if and only if $M_j > 84$. Figure 5 also depicts the threshold value Z = 84.

Thus, the security module 300 may perform an accusation test based on the above. The second test performed at the step 412 may, for example, involve testing whether $M_j > Z$ and, if so, concluding that the user j is performing a cloning attack.

As will be apparent, the value of the accusation threshold Z depends on the value of $N_j$ and the second test at the step 412 may be performed for different values of $N_j$ during the operational phase. Some embodiments may compute the value of Z or the value $F(M_j | N_j, \alpha)$ every time a different value of $N_j$ is used. If the normal distribution approximation is used as discussed above, then the costs for this will typically be negligible compared to the computation of $f_\phi(x)$; for example, in this case the value of Z may be based on simply adding a certain number of standard deviations to the mean (see, for example, https://en.wikipedia.org/wiki/Binomial_distribution for details about the corresponding coverages). Moreover, the output for the query may be returned to the user before the corresponding second test is performed. This can prevent any delay in providing the answer to a query. The cost of this is that a user that should have been accused based on the outcome of the accusation test can receive the (unmodified) answer to one additional NPD query sample (i.e. in total Z + 1 (unmodified) answers to query samples that were classified as NPD samples at the step 408 may have been returned to this user before they are accused, while this number should have been at most Z).

Since the value of the accusation threshold Z only depends on the values of $N_j$, $\alpha$, and $\delta$, one or more accusation threshold values may be precomputed as part of the one-time setup of embodiments of the invention, and stored (e.g. as part of, or as data used by, the security module 300) for use during the operational phase. Whilst this may result in a small increase in memory requirements for storing such pre-computed threshold values, the computational costs during the operational phase are reduced.

In some embodiments, the accusation test for user j can be performed after a threshold number of new queries are received from user j (e.g. once for every 1,000 new queries received from user j). In some such embodiments, the values of $M_j$ and $N_j$ may then be reset to zero after the second test is performed for user j at the step 412.

The value of $\delta$ may be set based on the expected number of users and/or the expected number of accusation tests per user.

A second type of error occurs when user j is an adversary performing a cloning attack but is not accused (i.e. a false negative if the null hypothesis is that the user is honest), i.e. *user j* is an adversary and $M_j \leq Z$. Let the corresponding probability be denoted by $\varepsilon$. In practice, a relatively large value of $\varepsilon$ can be tolerated since the above accusation test will be performed multiple times during the attack (due to the large number of queries the adversary needs to submit to generate the clone network $g_\phi$).

The value of $\varepsilon$ depends on the number of PD query samples and the number of NPD query samples submitted and tested for user j (recall that the sum of these two numbers equals $N_j$). This in turn depends on the particular attack. In addition, an adversary may submit more PD samples than strictly necessary for the attack with the objective of reducing the probability of being detected.

If the number of PD query samples tested with the first test at the step 408 is denoted by P, then the number of NPD query samples tested with the first test at the step 408 equals $N_j$ - P. Further, let $\beta$ be the false negative probability for the first test at the step 408. If the random variable $Y'$ represents the number of queries of user j that are classified as having an NPD sample at the step 408, then it follows that

$$Pr(Y' = k \mid N_j, \alpha, \beta, P) = \sum_{i=0}^{k} \binom{P}{i} \alpha^i (1 - \alpha)^{P-i} \binom{N_j - P}{k - i} \beta^{N_j - P - k + i} (1 - \beta)^{k-i}$$

for $0 \leq k \leq N_j$. The i-th term in this sum is the probability that exactly *i* PD query samples are classified as NPD samples and that exactly *k - i* NPD query samples are classified as NPD samples. The probability of a false negative is given by

$$\varepsilon = Pr(Y' \leq Z \mid N_j, \alpha, \beta, P) = \sum_{i=0}^{Z} Pr(Y' = i \mid N_j, \alpha, \beta, P)$$

Values of $\varepsilon$ do not necessarily need to be computed during the operational phase. Instead, such values may be pre-computed for a number of values of the parameters. These computations may also be used during the one-time setup of embodiments of the invention, e.g. to set/select the threshold value of the first test (i.e. T, T', or T'').

From the discussions above it follows that the total computational overhead during the operational phase can be negligible.

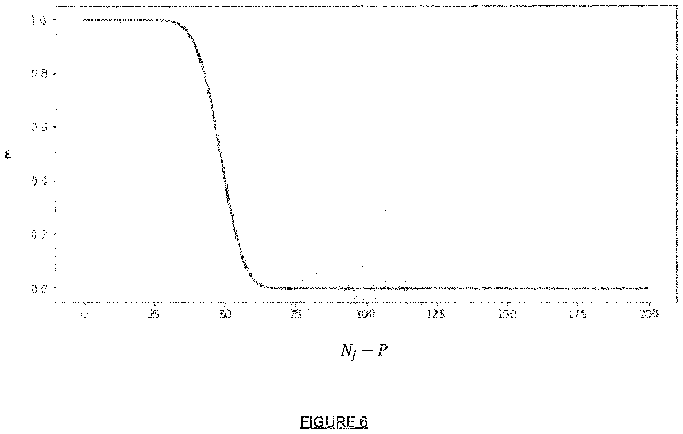

Example 4: Assuming the same setting as in the examples above (i.e. $N_j$ = 1,000, $\alpha = \beta$ = 0.04, and Z = 84), Figure 6 shows the value of ε as a function of the number of NPD query samples submitted and tested at the step 408 (i.e. the value of $N_j$ - P). Notice that the probability that a user/adversary who submitted 65 or more NPD query samples that are tested at the step 408 is not accused is very small; in particular, ε < 0.005 if $N_j$ - P ≥ 65.

It will be appreciated that the security module 300 (or the product 240 or the server/cloud-based system comprising the security module) may be implemented so as to protect the integrity and secrecy of embodiments of the invention. For example, tamperresistant and read-proof hardware and/or cryptographic techniques and/or software obfuscation techniques may be used. In this way, the integrity and secrecy of the values of one or more parameters described above (e.g. the value of α, β, $T$, $T'$, $T''$, δ, ε, $M_j$, and/or Z) may be protected, which in turn may complicate attack strategies.

### 5 - *Modifications*

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more fieldprogrammable-gate-arrays (FPGAs), and/or one or more application-specific-integratedcircuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

All reference documents cited herein are incorporated in their entirety.

### Claims

1. A method of protecting an implementation of a neural network against a cloning attack, the neural network configured to generate a result based on an input sample from a predetermined domain of possible samples, the neural network trained to provide functionality corresponding to a subset of the domain, wherein the method comprises:

   receiving, from a user, a plurality of queries having a corresponding query sample from the domain and, for each query, performing a first test to determine whether or not the corresponding query sample is a member of the subset;
   performing a second test to identify whether the user is performing a cloning attack against the neural network, wherein the second test identifies that the user is performing a cloning attack against the neural network if a number of queries from the plurality of queries for which the corresponding query sample is determined to not be a member of the subset exceeds a first threshold value; and

in response to the second test identifying that the user is performing a cloning attack against the neural network, performing one or more countermeasures for the cloning attack.

2. The method of claim 1, wherein:

(a) the functionality is based on a property of samples of the predetermined domain, and the corresponding subset is the set of samples from the predetermined domain for which that property satisfies one or more predetermined criteria; or

(b) the functionality is classification of samples of the predetermined domain according to one or more classes, and the corresponding subset is the set of samples from the predetermined domain that belong to one or more of the one or more classes; or

(c) the functionality is object detection, said object detection to detect one or more objects of one or more types within samples of the predetermined domain, and the corresponding subset is the set of samples from the predetermined domain that comprise at least one object of at least one of the one or more types.

3. The method of any one of the preceding claims, wherein:

(a) performing one or more countermeasures comprises preventing the user from using or accessing the implementation of the neural network; or

(b) performing one or more countermeasures comprises permitting the user to receive modified versions of responses generated by the neural network based on queries received from the user.

4. The method of any one of the preceding claims, wherein the second test identifies that the user is not performing a cloning attack against the neural network if the number of queries from the plurality of queries for which the corresponding query sample is determined to not be a member of the subset does not exceed the first threshold value, wherein the method comprises:

in response to identifying that the user is not performing a cloning attack against the neural network, permitting the user to receive responses generated by the neural network based on queries received from the user.

5. The method of any one of the preceding claims, comprising identifying the first threshold based on the number of queries in the plurality of queries and a target probability of incorrectly identifying that the user is performing a cloning attack against the neural network.

6. The method of any one of the preceding claims, wherein performing the first test to determine whether or not the corresponding query sample is a member of the subset comprises performing a comparison of a first likelihood and a second likelihood, the first likelihood based on the query sample and a null hypothesis that the query sample is a member of the subset, the second likelihood based on the query sample and an alternative hypothesis that the query sample is not a member of the subset.

7. The method of claim 6, wherein performing the first test to determine whether or not the corresponding query sample is a member of the subset comprises computing the first likelihood based on $p_0(U(x))$ and computing the second likelihood based on $p_1(U(x))$, wherein x is the corresponding query sample, U is a function for distinguishing between samples of the domain that are members of the subset and samples of the domain that are not members of the subset, $p_0$ is a probability density function for $U(X_0)$ where $X_0$ is a random variable representing samples of the domain that are members of the subset, and $p_1$ is a probability density function for $U(X_1)$ where $X_1$ is a random variable representing samples of the domain that are not members of the subset.

8. The method of claim 6 or 7, wherein performing the comparison of the first likelihood and the second likelihood comprises comparing a ratio of the first likelihood and the second likelihood to a second threshold value.

9. The method of claim 8, wherein:

(a) the second threshold value is set so that a false positive probability of the first test equals a false negative probability of the test; or

(b) the second threshold value is set so that a false positive probability of the first test is most a target false positive probability; or

(c) the second threshold value is set so that a false negative probability of the first test is most a target false negative probability.

10. The method of any one of the preceding claims, comprising one or both of:

(a) performing the first test each time a query is received from the user; and
(b) performing the second test each time a query is received from the user.

11. The method of any one of claims 1 to 9, comprising performing the second test only after a predetermined number of queries have been received from the user.

12. The method of any one of the preceding claims, wherein the method is performed by a system or device that (a) provides the implementation of the neural network or (b) provides access to the implementation of the neural network.

13. The method of any one of the preceding claims, wherein the user is either (a) one or more human users or (b) one or more computing devices.

14. The method of any one of the preceding claims, wherein the functionality is classification of samples of the predetermined domain according to one or more classes.

15. The method of claim 14, wherein the domain comprises samples that do not correspond to any of the one or more classes.

16. The method of any one of claims 1 to 13, wherein the functionality is object detection, said object detection to detect one or more objects of one or more types within samples of the predetermined domain.

17. A system arranged to carry out a method according to any one of claims 1 to 16.

18. A computer program which, when executed by one or more processors, causes the one or more processors to carry out a method according to any one of claims 1 to 16.

19. A computer-readable medium storing a computer program according to claim 18.

100

102

104

106

108

110

112

121

120

114

124

126

116

118

122

FIGURE 1

220$^{(a)}$

220$^{(b)}$

$f_\theta(x^{(a)})$    $x^{(a)}$

$x^{(b)}$    $f_\theta(x^{(b)})$

220$^{(c)}$

$g_\phi$   230

$x^{(c)}$

$f_\theta(x^{(c)})$

210

200

202   201   $f_\theta$

FIGURE 2a

220$^{(c)}$

$g_\phi$   230

$x^{(c)}$   $f_\theta(x^{(c)})$

240

201   $f_\theta$   202

FIGURE 2b

FIGURE 3a

FIGURE 3b

400

Initialize —402

Receive next query —404

Perform 1st test? —406

No

Yes

Perform 1st test
($N_j=N_j+1$; update $M_j$) —408

Perform 2nd test? —410

No

Yes

Perform 2nd test —412

Attack identified

Attack not identified

Take countermeasures —414

Permit provision of response(s) —416

FIGURE 4

$$Z = 84$$

FIGURE 5

FIGURE 6

Europäisches
Patentamt

European
Patent Office

Office européen
des brevets

**EUROPEAN SEARCH REPORT**

Application Number

EP 22 18 7939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/259946 A1 (BOSCH GMBH ROBERT [DE] ET AL.) 30 December 2020 (2020-12-30) * figure 1 and 2 * * paragraph [0001] * * paragraph [0006] – paragraph [0013] * * paragraph [0020] * * paragraph [0023] – paragraph [0044] * ----- | 1-19 | INV. G06N3/08 G06F21/55 G06F21/56 G06F21/57 H04L9/40 G06F21/14  ADD. G06N7/00 G06N3/04 G06F21/10 |

**TECHNICAL FIELDS SEARCHED (IPC)**

G06N
G06F
H04L

The present search report has been drawn up for all claims

| Place of search | Date of completion of the search | Examiner |
|---|---|---|
| The Hague | 13 December 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 18 7939

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2022

| Patent document cited in search report | Publication date | Patent family member(s) | Publication date |
|---|---|---|---|
| WO 2020259946 A1 | 30-12-2020 | EP 4007979 A1<br>WO 2020259946 A1 | 08-06-2022<br>30-12-2020 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FLORIAN TRAMÈR et al.** Stealing Machine Learning Models via Prediction APIs. *Proceedings of the 25th USENIX Security Symposium August 2016, Austin, TX,* 601-618
- **TRIBHUVANESH OREKONDY et al.** Knockoff Nets: Stealing Functionality of Black-Box Models. *Proceedings of the IEEE/CVF Conference on Computer Vision and Pattern Recognition (CVPR), Long Beach, CA,* 2019, 4949-4958
- **SILVA et al.** Copycat CNN: Stealing Knowledge by Persuading Confession with Random Non-Labeled Data. *International Joint Conference on Neural Networks (IJCNN),* July 2018, 1-8
- **ARNE AARTS et al.** Leveraging Partial Model Extractions using Uncertainty Quantification. *IEEE 10th International Conference on Cloud Networking (CloudNet), Virtual Conference, November 2021,* 2021, 19-25
- **TAESUNG LEE et al.** Defending against NN Model Stealing Attacks using Deceptive Perturbations. *2nd Deep Learning and Security Workshop (DLS 2019),* May 2019
- **TRIBHUVANESH OREKONDY et al.** Prediction Poisoning: Towards Defenses Against DNN Model Stealing Attacks. *Eighth International Conference on Learning Representations (ICLR), Virtual Conference,* 2020
- **MANISH KESARWANI et al.** Model Extraction Warning in MLaaS Paradigm. *ACSAC '18: Proceedings of the 34th Annual Computer Security Applications Conference,* December 2018, 371-380
- **MIKA JUUTI et al.** PRADA: Protecting Against DNN Model Stealing Attacks. *IEEE European Symposium on Security and Privacy (EuroS&P), Stockholm, Sweden, 2019,* 2019, 512-527
- **MOLOUD ABDAR et al.** A Review of Uncertainty Quantification in Deep Learning: Techniques, Applications and Challenges. *Information Fusion,* December 2021, vol. 76, 243-297